# EUROPEAN PATENT APPLICATION

(11) **EP 4 564 265 A1**
(43) Date of publication of application: **04.06.2025**
(21) Application number: 23845126.4
(22) Date of filing: 13.06.2023
(51) Int. Cl.: G06Q 20/12

(54) **INFORMATION DISPLAY METHOD AND APPARATUS, DEVICE, COMPUTER-READABLE STORAGE MEDIUM AND PRODUCT**

(30) Priority: 29.07.2022 CN 202210908708
(71) Applicant: Beijing Zitiao Network Technology Co., Ltd., Beijing 100190 (CN)
(72) Inventor: XIE, Mengfei, Beijing 100028 (CN); ZHONG, Qifan, Beijing 100028 (CN); WENG, Jie, Beijing 100028 (CN); CHOU, Po Yu, Beijing 100028 (CN)
(74) Representative: Dentons UK and Middle East LLP
(86) International application number: PCT/CN2023/100007
(87) International publication number: WO 2024/021913

(57) **Abstract**

Embodiments of the present disclosure provide an information method and apparatus, a device, a computer-readable storage medium, a product and a program. The method comprises: in responses to a use operation of a user on a target function, determining in real time remaining permission information corresponding to the target function, wherein the remaining permission information comprises a remaining available duration or a number of remaining available times; and displaying the remaining permission information in a preset display area in the content display page of the target function.

## Description

### CROSS-REFERENCE TO RELATED APPLICATION

This application claims the priority to and benefits of Chinese Patent Application No. 202210908708.1, filed on July 29, 2022, entitled "Information display method and apparatus, equipment, computer-readable storage medium and product", the entire contents of which are incorporated herein by reference.

### TECHNICAL FIELD

Embodiments of the present disclosure relate to the field of interface interaction technologies, and in particular, to an information display method and an apparatus, a device, a computer-readable storage medium, a product, and a program.

### BACKGROUND

With the development of technologies, application software can provide more and more functions, and different functions may need different uses. Using video software as an example, some videos can be watched only after a user registers for a membership.

However, after registration, if needing to view failure time, the user first needs to manually jump to a display page of information, and view the information on the display page. The operation is usually relatively complex, and user experience is poor.

### SUMMARY

Embodiments of the present disclosure provide an information display method and an apparatus, a device, a computer-readable storage medium, a product, and a program, for resolving the technical problem that an existing operation of viewing permission remaining time is relatively complex.

In a first aspect, the present disclosure provides an information display method, includes:
in response to a use operation of a user on a target function, determining, in real time, remaining permission information corresponding to the target function, wherein the remaining permission information comprises a remaining available duration or a quantity of remaining available times; and
displaying the remaining permission information in a preset display region in a content display page of the target function.

In a second aspect, the present disclosure also provides an information display apparatus, includes:
a determining module, configured to: in response to a use operation of a user on a target function, determine, in real time, remaining permission information corresponding to the target function, wherein the remaining permission information comprises a remaining available duration or a quantity of remaining available times; and
a display module, configured to display the remaining permission information in a preset display region in a content display page of the target function.

In a third aspect, the present disclosure also provides an electronic device, comprising: a processor and a memory,
the memory stores computer-executable instructions; and
the processor executes the computer-executable instructions stored in the memory, so that the processor performs the information display method according to the first aspect and various possible designs of the first aspect.

In a fourth aspect, the present disclosure also provides a computer-readable storage medium, on which stores computer instructions, the computer instructions are used to enable the processor to implement the information display methods according to the first aspect and various possible designs of the first aspect.

In a fifth aspect, the present disclosure provides a computer program product, when the computer programs are executed by a processor, the information display methods according to the first aspect and various possible designs of the first aspect are implemented.

### BRIEF DESCRIPTION OF DRAWINGS

To describe the technical solutions in embodiments of the present disclosure or the prior art more clearly, the following briefly describes the accompanying drawings required for describing the embodiments or the prior art. Apparently, the accompanying drawings in the following description show some embodiments of the present disclosure, and a person of ordinary skill in the art may still derive other drawings from these accompanying drawings without creative efforts.
Fig. 1 is a schematic flowchart of an information display method according to an embodiment of the present disclosure;
Fig. 2 is a schematic diagram of a display interface according to an embodiment of the present disclosure;
Fig. 3 is a schematic diagram of another display interface according to an embodiment of the present disclosure;
Fig. 4 is a schematic flowchart of an information display method according to another embodiment of the present disclosure;
Fig. 5 is a schematic flowchart of an information display method according to another embodiment of the present disclosure;
Fig. 6 is a schematic diagram of interface interaction according to an embodiment of the present disclosure;
Fig. 7 is a schematic structural diagram of an information display apparatus according to an embodiment of the present disclosure; and
Fig. 8 is a schematic structural diagram of an electronic device according to an embodiment of the present disclosure.

### DETAILED DESCRIPTION

To make the objectives, technical solutions, and advantages of embodiments of the present disclosure clearer, the following clearly and completely describes the technical solutions in embodiments of the present disclosure with reference to the accompanying drawings in embodiments of the present disclosure. Apparently, the described embodiments are some rather than all of the embodiments of the present disclosure. Based on embodiments of the present disclosure, all other embodiments obtained by a person skilled in the art without creative efforts fall within the protection scope of the present disclosure.

To resolve the technical problem that an existing procedure of viewing remaining permission information is relatively complex, the present disclosure provides an information display method and an apparatus, a device, a computer-readable storage medium, and a product.

It should be noted that, the information display method and the apparatus, the device, the computer-readable storage medium, and the product provided in the present disclosure may be used in any application scenario of viewing remaining permission information.

In an existing method for viewing remaining permission information, a user usually needs to manually find a permission information viewing entry, and jump to a permission information display page for viewing the remaining permission information. In addition, the remaining permission information on the permission information display page usually displays end time of permission information, the user can only perform deduction on the remaining permission information according to the end time, and therefore the operation is usually relatively complex.

In a process of resolving the foregoing technical problem, the inventor finds, through research, that, to simplify the procedure of viewing the remaining permission information, the remaining permission information may be displayed in a countdown manner or a quantity of times countdown manner on a content display interface of a target function, so that the user can intuitively know the remaining permission information in a process of using the target function.

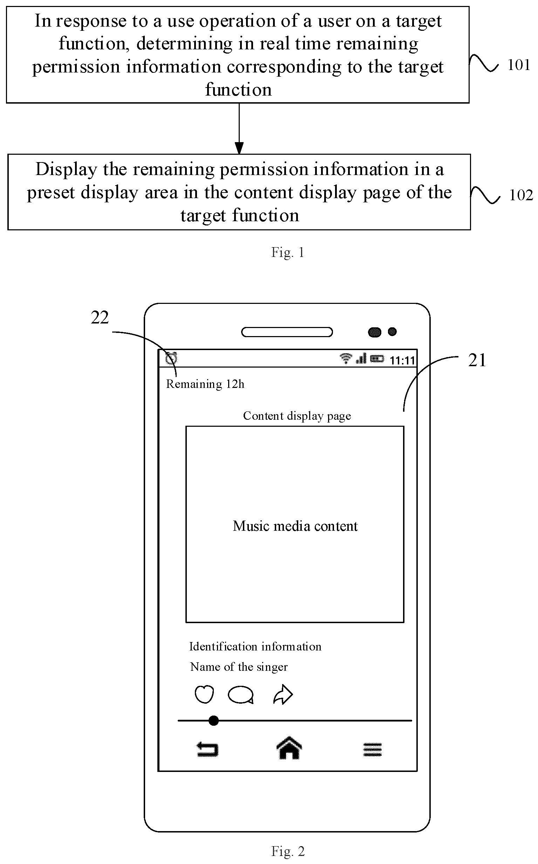

Fig. 1 is a schematic flowchart of an information display method according to an embodiment of the present disclosure. As shown in Fig. 1, the method includes:
Step 101: In response to a use operation of a user on a target function, determining, in real time, remaining permission information corresponding to the target function, wherein the remaining permission information includes remaining available duration or a quantity of remaining available times.

An execution body of this embodiment is an information display apparatus, which may be coupled into a terminal device, so as to determine, in real time, the remaining permission information corresponding to the target function according to the use operation of the user on the target function, and display the remaining permission information. Optionally, the information display apparatus may alternatively be coupled into a server. The server can be communicatively connected to the terminal device, so as to obtain the use operation on the terminal device of the user on the target function, determine the remaining permission information corresponding to the target function, and display the remaining permission information.

In this implementation, the target function may be any function that can be used only with a specific use permission in applications. Using actual applications as examples, the target function may be a music media content stream browse function. When the user uses the target function, a music media content stream can be browsed. The use permission may be handled by the user according to an actual requirement, or may be delivered to an account of the user according to preset time intervals. This is not limited in the present disclosure.

Optionally, still using actual functions as examples, when the target function is the music media content stream browse function, the use permission may be a use permission within specific duration, or the use permission may be a use permission with a specific quantity of times. For example, the use permission may be watching the music media content stream for free for 12 hours within one month, or the use permission may be watching the music media content stream for free for 12 times within one month, or the use permission may be watching the music media content stream for free at any time within one month. The user may handle and adjust the use permission according to an actual requirement.

Further, when the use operation of the user on the target function is obtained, in response to the use operation, the remaining permission information corresponding to the target function may be determined in real time. The remaining permission information may be specifically a remaining use permission, and may include remaining available duration or a quantity of remaining available times for the target function.

Step 102: Displaying the remaining permission information in a preset display region in a content display page of the target function.

In this implementation, in the existing method for viewing remaining permission information, the user usually needs to find a permission information display page, and view the end time of the permission information on the permission information display page, to calculate the remaining permission information. The operation is usually relatively complex.

Therefore, to enable the user to determine the remaining permission information more intuitively, after the remaining permission information is determined, the remaining permission information may be displayed on the content display page corresponding to the target function. For example, the content display page corresponding to the target function is specifically used to display information of music media content, for example, an identifier, lyrics, creator information, interaction information, and the like that correspond to the music media content.

Optionally, to prevent the remaining permission information from blocking the display information of the music media content, the remaining permission information may be displayed in the preset display region in the content display page. For example, the preset display region may be an upper side, a lower side, or the like of the content display page.

Optionally, to enable display of the remaining permission information to better meet a personalized requirement of the user, the user may trigger an adjustment operation on display information of the remaining permission information. For example, a font, a border, a coverage, a display position, and a display shape of the remaining permission information may be adjusted, and this is not limited in the present disclosure.

Optionally, based on any one of the foregoing embodiments, the remaining permission information includes remaining available duration.

Step 102 includes:
displaying the remaining permission information in a countdown manner in the preset display region in the content display page of the target function.

In this embodiment, the remaining permission information may be specifically remaining available duration.

Further, when the remaining permission information is the remaining available duration, with duration of using the target function by the user increases, the remaining available duration also changes accordingly. Therefore, to display remaining available information more accurately, the remaining permission information may be displayed in a countdown manner on the content display page.

Fig. 2 is a schematic diagram of a display interface according to an embodiment of the present disclosure. As shown in Fig. 2, remaining permission information 22 corresponding to the target function may be displayed in the preset display region in the content display page 21 of the target function.

In the information display method provided in this embodiment, the remaining permission information corresponding to the target function is determined in real time, and the remaining permission information is displayed on the content display page of the target function, so that when using the target function, the user can intuitively determine the remaining duration or remaining quantity of times corresponding to the permission of using the target function. This simplifies the procedure of viewing the remaining permission information, and improves user experience.

Further, based on any one of the foregoing embodiments, step 101 includes:
determining, in real time, accumulated permission information corresponding to the target function; and
determining a difference between the accumulated permission information and a preset available permission threshold as the remaining permission information.

The preset use permission threshold is a total available duration or a total quantity of available times which are corresponding to the target function and distributed to an account of the user according to a preset time period.

In this embodiment, to optimize use experience of the user on the target function, the total use duration or the total quantity of available times corresponding to the target function may be distributed to the account of the user according to the preset time period. For example, a permission of 12-hour duration of watching the music media content stream for free may be distributed to the account of the user per month, or a permission of 12 times of watching the music media content stream for free may be distributed to the account of the user per month.

Therefore, to calculate the remaining permission information, after the trigger operation of the user on the target function is obtained, the accumulated permission information corresponding to the target function may be determined in real time. For example, if the user uses the target function for three times in this month, and each for half an hour, the accumulated permission information may be one and a half hours.

The difference between the accumulated permission information and the preset available permission threshold is calculated, and the difference is determined as the remaining permission information, so as to accurately determine the remaining permission information.

In the information display method provided in this embodiment, the difference between the accumulated permission information and the preset available permission threshold is calculated, and the difference is determined as the remaining permission information, so as to accurately determine the remaining permission information. Further, the user can be enabled to know the remaining permission information more accurately on the content display page, to improve user experience.

Further, based on any one of the foregoing embodiments, after step 101, the method further includes:
if it is detected that the remaining permission information is identical to the available permission threshold, displaying a prompt control on the content display page, where the prompt control is used to prompt the user of the use permission threshold of the target function within a preset time interval.

In this implementation, if the user uses the target function for the first time or the user uses the target function for the first time within a preset time interval, the user may not know the available permission threshold. Therefore, to enable the user to know the available permission threshold, after the remaining permission information is determined, whether the remaining permission information is identical to the use permission threshold may be detected. If yes, it represents that the user does not use the target function within the preset time interval, or it may represent that the user has never used the target function.

Further, the prompt control may be displayed on the content display page. Prompt information may be displayed in the prompt control. The prompt information is used to prompt the user of the available permission threshold of the target function within the preset time interval. For example, the prompt information may be specifically: you can use the target function for free for 12 hours each month.

Optionally, based on any one of the foregoing embodiments, the prompt control further includes a permission information obtaining option, and a closing option. After the displaying a prompt control on the content display page, the method further includes:
in response to the trigger operation of the user on the permission information obtaining option, jumping to the permission information obtaining page, where the permission information obtaining page is configured to obtain the permission information according to the trigger operation of the user; and
in response to a trigger operation of the user on the closing option, closing the prompt control.

In this embodiment, according to different use requirements of different users on the target function, permission duration or quantities of times of the permission required by the users within the preset time interval may be different. Therefore, the permission information obtaining option may be further displayed on the prompt control. In this way, the user can perform the trigger operation on the permission information obtaining option according to an actual requirement, to jump to the permission information obtaining page, and perform an operation of obtaining more permission information on the permission information obtaining page.

Alternatively, to prevent the prompt control from blocking the music media content stream, the closing option may be further disposed on the prompt control. In response to the trigger operation of the user on the closing option, the prompt control may be closed. In this way, the user can view the music media content stream on the content display page.

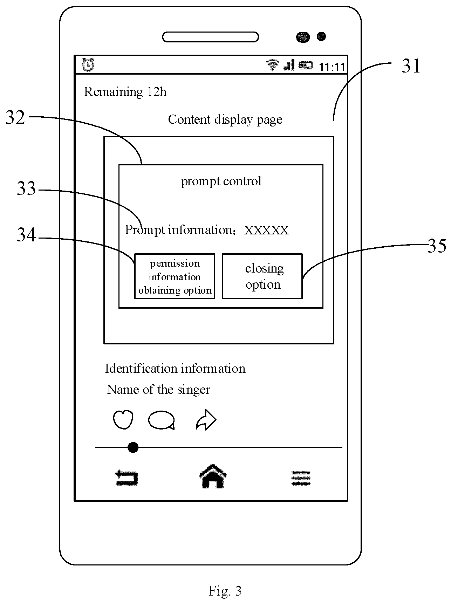

Fig. 3 is a schematic diagram of another display interface according to an embodiment of the present disclosure. As shown in Fig. 3, when it is detected that the user uses the target application for the first time within the preset time interval, a prompt control 32 may be displayed on a content display page 31 corresponding to the target application. Prompt information 33 is displayed on the prompt control 32. The prompt information 33 is used to prompt the user of the use permission threshold of the target function within the preset time interval. In addition, a permission information obtaining option 34 and a closing option 35 are further disposed on the prompt control 32. The user may obtain more permission information through a trigger operation on the permission information obtaining option 34. The user may perform a closing operation on the prompt control 32 through a trigger operation on the closing option 35.

In the information display method provided in this embodiment, the prompt control is displayed on the content display page, so that on one aspect, the user can know the use permission threshold, and on the other aspect, the user can further obtain more permission information through the prompt control, to simplify the procedure of obtaining the permission information.

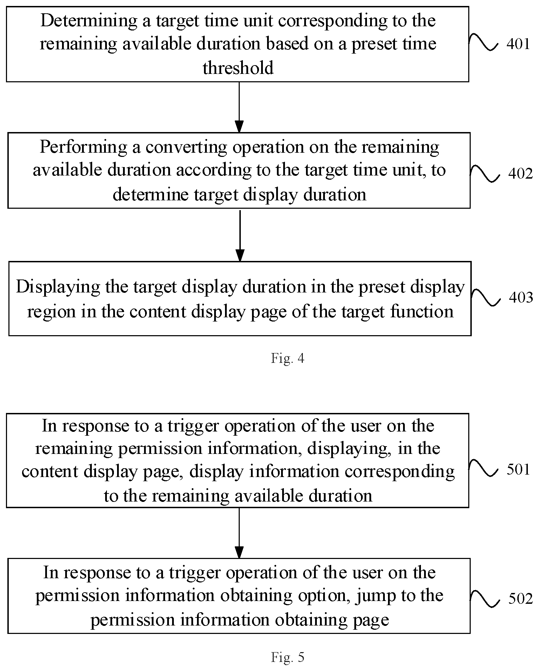

Fig. 4 is a schematic flowchart of an information display method according to another embodiment of the present disclosure. Based on any one of the foregoing embodiments, the remaining permission information includes remaining available duration. As shown in Fig. 4, step 102 specifically includes:
Step 401: Determining a target time unit corresponding to the remaining available duration based on a preset time threshold.
Step 402: Performing a converting operation on the remaining available duration according to the target time unit, to determine target display duration.
Step 403: Displaying the target display duration in the preset display region in the content display page of the target function.

In this embodiment, the remaining permission information may be specifically remaining available duration. In actual application, because there is a relatively large quantity of time units, for different remaining available duration, if a same time unit is always used for displaying the remaining available duration, the display effect may be poor. For example, if hours are always used as a time unit to display the remaining available duration, when the remaining available duration is two days, remaining 48h needs to be displayed on the content display interface; when the remaining available duration is 20 minutes, remaining 0.33h needs to be displayed on the content display page; and when the remaining duration is 50 seconds, remaining 0.0139h needs to be displayed on the content display page. The user cannot determine, at the first time according to the remaining available duration displayed on the content display page, remaining duration of using the target function, resulting in relatively poor user experience.

Therefore, a time threshold may be preset, and a switching operation on a time unit may be performed according to the time threshold. The converting operation is performed on the remaining available duration according to the target time unit obtained through switching, to determine the target display duration. The target display duration is displayed in the preset display region in the content display page of the target function.

Further, based on any one of the foregoing embodiments, the time threshold includes a first threshold and a second threshold. Step 401 includes:
if the remaining available duration is greater than the first threshold, determining that the target time unit corresponding to the remaining available duration is a first time unit;
if the remaining available duration is less than the first threshold, determining that the target time unit corresponding to the remaining available duration is a second time unit; or
if the remaining available duration is less than the second threshold, determining that the target time unit corresponding to the remaining available duration is a third time unit, where
the first threshold is greater than the second threshold.

In this embodiment, the time threshold may specifically include the first threshold and the second threshold. The first threshold may be specifically one hour, and the second threshold may be one minute.

Based on the foregoing time threshold, if it is detected that the remaining available duration is greater than the first threshold, that is, the remaining duration is greater than one hour, it may be determined that the target time unit corresponding to the remaining available duration is the first time unit. The first time unit may be hours. For example, when the remaining available duration is two hours, the remaining 2h may be displayed on the content display page.

When it is detected that the remaining available duration is less than the second threshold, that is, the remaining duration is less than one hour, it is determined that the target time unit corresponding to the remaining available duration is the third time unit. The second time unit may be minutes. For example, when the remaining available duration is 50 minutes, the remaining 50 min may be displayed on the content display page.

When it is detected that the remaining available duration is less than the second threshold, that is, the remaining duration is less than one minute, it is determined that the target time unit corresponding to the remaining available duration is the third time unit. The third time unit is seconds. For example, when the remaining available duration is 45 seconds, the remaining 45 seconds may be displayed on the content display page.

In the information display method provided in this embodiment, different remaining available duration is converted and displayed by using different time units, so that the displayed remaining available duration better meets daily use requirements of the user, and the user determines the use time corresponding to the target function more intuitively, thereby improving user experience.

Fig. 5 is a schematic flowchart of an information display method according to another embodiment of the present disclosure. Based on any one of the foregoing embodiments, as shown in Fig. 5, after step 102, the method further includes:
Step 501: In response to a trigger operation of the user on the remaining permission information, displaying, in the content display page, display information corresponding to the remaining available duration, wherein the display information includes the remaining permission information and a permission information obtaining option.
Step 502: In response to a trigger operation of the user on the permission information obtaining option, jump to the permission information obtaining page, where the permission information obtaining page is configured to obtain the permission information according to the trigger operation of the user.

In this embodiment, after the remaining permission information is displayed on the content display page, the user may perform the trigger operation on the remaining permission information according to an actual requirement. In response to the trigger operation, the display information corresponding to the remaining available information may be displayed on the content display page. The display information may include the remaining available information and the permission information obtaining option. Optionally, a display size of the remaining available information in the display information may be greater than a display size of the remaining available information displayed on the content display page, so that the user can know the remaining available information more intuitively based on the display information.

Further, if the trigger operation of the user on the permission information obtaining option in the display information is detected, the user may jump to the permission information obtaining page, so that the user can obtain more permission information on the permission information obtaining page.

Optionally, the user may close the display information through a trigger operation at another position on the content display page. And/or, the display information may further include a closing option. The user may trigger the closing option, to close the display information. This is not limited in the present disclosure.

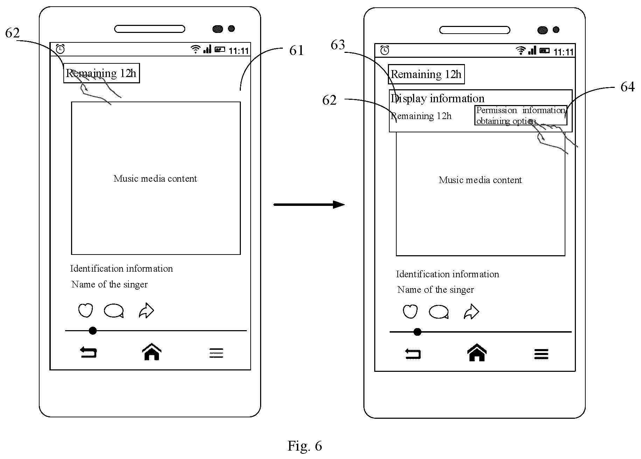

Fig. 6 is a schematic diagram of interface interaction according to an embodiment of the present disclosure. As shown in Fig. 6, remaining permission information 62 may be displayed on a content display page 61. After a trigger operation of the user on the remaining permission information 62 is obtained, display information 63 corresponding to the remaining available information may be displayed on the content display page 61, where the display information 63 includes the remaining permission information 62 and a permission information obtaining option 64. In response to the trigger operation of the user on the permission information obtaining option 64, the user may jump to the permission information obtaining page. Therefore, the user may perform an operation of obtaining the permission information on the permission information obtaining page.

In the information display method provided in this embodiment, according to the trigger operation of the user on the remaining permission information, the display information of the remaining permission information is displayed on the content display page, so that the user knows the remaining permission information, and can quickly obtain more permission information.

Further, based on any one of the foregoing embodiments, after step 101, the method further includes:
if it is determined that the remaining permission information meets a preset stopping condition, displaying the permission information obtaining page in the content display page, where the permission information obtaining page is configured to obtain the permission information according to the trigger operation of the user.

In this embodiment, in a process in which the user uses the target function, when there is relatively little remaining permission information, to enable the user to know the remaining permission information more intuitively, the permission information obtaining page may be displayed on the content display page, so that the user can obtain more permission information on the permission information obtaining page.

Specifically, after the remaining permission information is determined, whether the remaining permission information meets the preset stopping condition may be detected. The stopping condition may be that the remaining time is less than a preset time threshold, or the remaining quantity of times is less than a preset quantity of times threshold, or the like. When the preset stopping condition is met, the permission information obtaining page may be displayed on the content display page.

Further, based on any one of the foregoing embodiments, the target function is a media content stream browse function. After step 101, the method further includes:
if it is detected that the remaining permission information does not exist, stopping playing the media content.

In this embodiment, the target function may be specifically the media content stream browse function. The media content includes but is not limited to music media content, video media content, audio media content, and the like. This is not limited in the present disclosure. When it is detected that the remaining permission information does not currently exist, playing of currently played media content may be stopped.

Alternatively, playing of the currently played media content may be continued. After the media content is played, other media content in the media content stream does not continue to be played.

In the information display method provided in this embodiment, when the remaining permission information meets the preset stopping condition, the permission information obtaining page is displayed on the content display page, so that on one aspect, the user can know the remaining permission information more intuitively, and on the other aspect, the user can quickly obtain the permission information, thereby improving user experience.

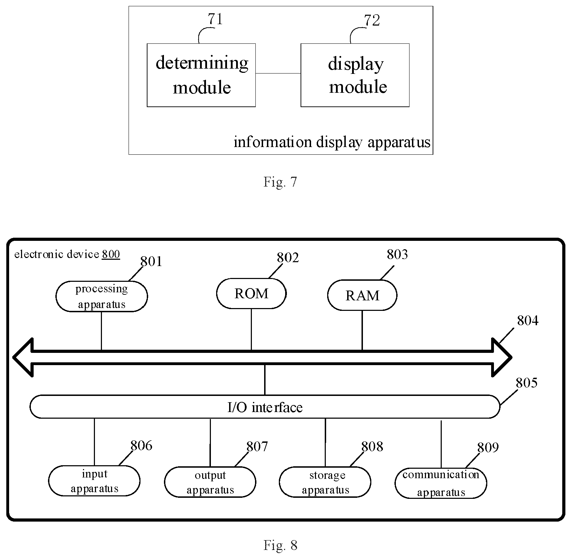

Fig. 7 is a schematic structural diagram of an information display apparatus according to an embodiment of the present disclosure. As shown in Fig. 7, the information display apparatus includes: a determining module 71 and a display module 72. The determining module 71 is configured to in response to a use operation of a user on a target function, determine, in real time, remaining permission information corresponding to the target function, where the remaining permission information includes remaining available duration or a quantity of remaining available times. The display module 72 is configured to display the remaining permission information in a preset display region in a content display page of the target function.

Further, based on any one of the foregoing embodiments, the remaining permission information includes remaining available duration. The display module is configured to display the remaining permission information in a countdown manner in the preset display region in the content display page of the target function.

Further, based on any one of the foregoing embodiments, the determining module is configured to determine, in real time, accumulated permission information corresponding to the target function; and determine a difference between the accumulated permission information and a preset available permission threshold as the remaining permission information. The preset available permission threshold is a total available duration or a total quantity of available times which are corresponding to the target function and distributed to an account of the user according to a preset time period.

Further, based on any one of the foregoing embodiments, the apparatus further includes: a displaying module, configured to if it is detected that the remaining permission information is identical to the available permission threshold, display a prompt control on the content display page, where the prompt control is used to prompt the user of the available permission threshold of the target function within a preset time interval.

Further, based on any one of the foregoing embodiments, the prompt control further includes a permission information obtaining option, and a closing option. The apparatus further includes: a jumping module, configured to in response to the trigger operation of the user on the permission information obtaining option, jump to the permission information obtaining page, where the permission information obtaining page is configured to obtain the permission information according to the trigger operation of the user. The closing module is configured to: in response to a trigger operation of the user on the closing option, close the prompt control.

Further, based on any one of the foregoing embodiments, the remaining permission information includes remaining available duration. The display module is configured to: determine a target time unit corresponding to the remaining available duration based on a preset time threshold; perform a converting operation on the remaining available duration according to the target time unit, to determine target display duration; and display the target display duration in the preset display region in the content display page of the target function.

Further, based on any one of the foregoing embodiments, the time threshold includes a first threshold and a second threshold. The display module is configured to: if the remaining available duration is greater than the first threshold, determine that the target time unit corresponding to the remaining available duration is a first time unit; if the remaining available duration is less than the first threshold, determine that the target time unit corresponding to the remaining available duration is a second time unit; or if the remaining available duration is less than the second threshold, determine that the target time unit corresponding to the remaining available duration is a third time unit, where the first threshold is greater than the second threshold.

Further, based on any one of the foregoing embodiments, the apparatus further includes: the display module, further configured to: in response to a trigger operation of the user on the remaining permission information, display, in the content display page, display information corresponding to the remaining available information, where the display information includes the remaining permission information and a permission information obtaining option; and the jumping module, further configured to: in response to a trigger operation of the user on the permission information obtaining option, jump to the permission information obtaining page, where the permission information obtaining page is configured to obtain the permission information according to the trigger operation of the user.

Further, based on any one of the foregoing embodiments, the apparatus further includes: the displaying module, further configured to: if it is determined that the remaining permission information meets a preset stopping condition, display the permission information obtaining page in the content display page, where the permission information obtaining page is configured to obtain the permission information according to the trigger operation of the user.

Further, based on any one of the foregoing embodiments, the target function is a music media content stream browse function. The apparatus further includes: a control module, configured to: if it is detected that the remaining permission information does not exist, stop playing music media content.

The device provided in this embodiment may be configured to execute the technical solutions in the foregoing method embodiments, and an implementation principle and technical effect of the device are similar to those of the method embodiments, and details are not described herein again in this embodiment.

To implement the foregoing embodiments, an embodiment of the present disclosure further provides an electronic device, including a processor and a memory, where
the memory stores computer-executable instructions; and
the processor executes the computer-executable instructions stored in the memory, so that the at least one processor performs the information display method according to any one of the foregoing embodiments.

Fig. 8 is a schematic structural diagram of an electronic device according to an embodiment of the present disclosure. As shown in Fig. 8, the electronic device 800 may be a terminal device or a server. The terminal device may include but is not limited to a mobile terminal such as a mobile phone, a notebook computer, a digital broadcast receiver, a personal digital assistant (Personal Digital Assistant, PDA for short), a tablet computer (Portable Android Device, PAD for short), a portable multimedia player (Portable Media Player, PMP for short), and a vehicle terminal (such as a vehicle navigation terminal), as well as a fixed terminal such as a digital TV and a desktop computer. The electronic device shown in Fig. 8 is merely an example, and should not constitute any limitation on functions and use scope of embodiments of the present disclosure.

Usually, the following apparatuses may be connected to the I/O interface 805: an input apparatus 806 including, for example, a touchscreen, a touchpad, a keyboard, a mouse, a camera, a microphone, an accelerometer, a gyroscope, or the like; an output apparatus 807 including, for example, a liquid crystal display (Liquid Crystal Display, LCD for short), a speaker, a vibrator, or the like; a storage apparatus 808 including, for example, a magnetic tape, a hard disk, or the like; and a communication apparatus 809. The communication apparatus 809 may allow the electronic device 800 to communicate in a wireless or wired manner with another device to exchange data. Although Fig. 8 shows the electronic device 800 with various apparatuses, it should be understood that it is not required to implement or own all the shown apparatuses. More or fewer apparatuses may alternatively be implemented or owned.

In particular, according to embodiments of the present disclosure, the foregoing process described with reference to a flowchart may be implemented as a computer software program. For example, an embodiment of the present disclosure includes a computer program product, including a computer program carried on a computer-readable medium, and the computer program includes program code for executing the method shown in a flowchart. In such an embodiment, the computer program may be downloaded and installed from a network through the communication apparatus 809, or installed from the storage apparatus 808, or installed from the ROM 802. When the computer program is executed by the processing apparatus 801, the foregoing functions defined in the method of this embodiment of the present disclosure are executed.

It should be noted that, the computer-readable medium of the present disclosure may be a computer-readable signal medium or a computer-readable storage medium, or a combination thereof. The computer-readable storage medium may be, but is not limited to, an electric, magnetic, optical, electromagnetic, infrared, or semiconductor system, apparatus, or device, or any combination thereof. More specific examples of the computer-readable storage medium may include, but not limited to, an electrical connection having one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium including or storing a program that may be used by an instruction execution system, apparatus, or device, or be used in combination with an instruction execution system, apparatus, or device. However, in the present disclosure, a computer-readable signal medium may include a data signal propagated in a baseband or propagated as a part of a carrier, where the data signal carries computer-readable program code. Such a propagated data signal may take a variety of forms, including but not limited to an electromagnetic signal, an optical signal, or any suitable combination thereof. The computer-readable signal medium may alternatively be any computer-readable medium other than the computer-readable storage medium. The computer-readable signal medium may send, propagate, or transmit the program used by the instruction execution system, apparatus, or device, or used in combination with the instruction execution system, apparatus, or device. The program code included in the computer-readable medium may be transmitted through any suitable medium, including but not limited to: a wire, an optical cable, RF (radio frequency), and the like, or any suitable combination thereof.

Another embodiment of the present disclosure further provides a computer-readable storage medium. The computer-readable storage medium stores computer-executable instructions. When the processor executes the computer-executable instructions, the information display method according to any one of the foregoing embodiments is implemented.

Another embodiment of the present disclosure further provides a computer program product, including a computer program, where when the computer program is executed by a processor, the information display method according to any one of the foregoing embodiments is implemented.

The computer-readable medium may be included in the electronic device; or may exist independently without being assembled into the electronic device.

The foregoing computer-readable medium carries one or more programs, and when the one or more programs are executed by the electronic device, the electronic device is enabled to perform the method shown in the foregoing embodiments.

Computer program code for performing the operations of the present disclosure may be written in one or more programming languages or a combination thereof. The programming languages include object-oriented programming languages such as Java, Smalltalk, C++, and conventional procedural programming languages such as "C" language or similar programming languages. The program code may be executed entirely on a user computer, or some may be executed on a user computer as a separate software package, or some may be executed on a user computer while some is executed on a remote computer, or the code may be entirely executed on a remote computer or a server. In a case involving a remote computer, the remote computer may be connected to the user computer by using any type of network, including a local area network (Local Area Network, LAN for short) or a wide area network (Wide Area Network, WAN for short), or may be connected to an external computer (for example, using an Internet service provider to connect via the Internet).

The flowcharts and block diagrams in the accompanying drawings show system architectures, functions, and operations that may be implemented by systems, methods, and computer program products according to various embodiments of the present disclosure. In this regard, each block in the flowcharts or block diagrams may represent a module, a program segment, or a part of code, and the module, the program segment, or the part of the code includes one or more executable instructions for implementing a specified logical function. It should also be noted that, in some alternative implementations, functions marked in the blocks may also occur in a sequence different from that marked in the accompanying drawings. For example, two consecutively shown blocks may be actually executed substantially in parallel, or sometimes may be executed in a reverse sequence, depending on a function involved. It should also be noted that, each block in a block diagram and/or a flowchart, as well as combinations of blocks in the block diagram and/or the flowchart, may be implemented with a dedicated hardware-based system that performs a specified function or operation, or may be implemented with a combination of dedicated hardware and computer instructions.

The described units in embodiments of the present disclosure may be implemented by way of software or may be implemented by way of hardware. Names of the units do not constitute limitations on these units themselves in some cases. For example, the first obtaining unit may also be described as "a unit that obtains at least two Internet Protocol addresses".

The functions described above herein may be performed, at least partially, by one or more hardware logic components. For example, non-limitatively, exemplary types of hardware logic components that may be used include: a field programmable gate array (FPGA), an application-specific integrated circuit (ASIC), application-specific standard product (ASSP), a system on chip (SOC), a complex programmable logical device (CPLD), and the like.

In the context of the present disclosure, a machine-readable medium may be a tangible medium that may include or store a program for use by or in combination with an instruction execution system, apparatus, or device. The machine-readable medium may be a machine-readable signal medium or a machine-readable storage medium. The machine-readable medium may include but not limited to an electronic, magnetic, optical, electromagnetic, infrared, or semiconductor system, apparatus, or device, or any suitable combination of the foregoing content. More specific examples of the machine-readable storage medium include an electrical connection having one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing content.

In a first aspect, according to one or more embodiments of the present disclosure, an information display method is provided, including:
in response to a use operation of a user on a target function, determining, in real time, remaining permission information corresponding to the target function, wherein the remaining permission information comprises a remaining available duration or a quantity of remaining available times;
displaying the remaining permission information in a preset display region in a content display page of the target function.

According to one or more embodiments of the present disclosure, wherein the determining, in real time, remaining permission information corresponding to the target function includes:
determining, in real time, accumulated permission information corresponding to the target function; and
determining a difference between the accumulated permission information and a preset available permission threshold as the remaining permission information,
wherein the preset use permission threshold is a total available duration or a total quantity of available times which are corresponding to the target function and distributed to an account of the user according to a preset time period.

According to one or more embodiments of the present disclosure, wherein after the in response to a use operation of a user on a target function, determining, in real time, remaining permission information corresponding to the target function, the method further includes:
when it is detected that the remaining permission information is identical to the available permission threshold, displaying a prompt control on the content display page, wherein the prompt control is used to prompt the user of the available permission threshold of the target function within a preset time interval.

According to one or more embodiments of the present disclosure, wherein the prompt control further includes a permission information obtaining option, and a closing option, and after the displaying a prompt control on the content display page, the method further includes:
in response to a trigger operation of the user on the permission information obtaining option, jumping to a permission information obtaining page, wherein the permission information obtaining page is configured to obtain permission information according to the trigger operation of the user; and
in response to a trigger operation of the user on the closing option, closing the prompt control.

According to one or more embodiments of the present disclosure, wherein the remaining permission information includes the remaining available duration; and
the displaying the remaining permission information in a preset display region in a content display page of the target function comprises:
displaying the remaining permission information in a countdown manner in the preset display region in the content display page of the target function.

According to one or more embodiments of the present disclosure, wherein the remaining permission information includes the remaining available duration; and
the displaying the remaining permission information in a preset display region in a content display page of the target function comprises:
determining a target time unit corresponding to the remaining available duration based on a preset time threshold;
performing a converting operation on the remaining available duration according to the target time unit, to determine target display duration; and
displaying the target display duration in the preset display region in the content display page of the target function.

According to one or more embodiments of the present disclosure, wherein the time threshold includes a first threshold and a second threshold; and
the determining a target time unit corresponding to the remaining available duration based on a preset time threshold includes:
when the remaining available duration is greater than the first threshold, determining that the target time unit corresponding to the remaining available duration is a first time unit;
when the remaining available duration is less than the first threshold, determining that the target time unit corresponding to the remaining available duration is a second time unit; or
when the remaining available duration is less than the second threshold, determining that the target time unit corresponding to the remaining available duration is a third time unit, wherein
the first threshold is greater than the second threshold.

According to one or more embodiments of the present disclosure, wherein after the displaying the remaining permission information in a preset display region in a content display page of the target function, the method further includes:
in response to a trigger operation of the user on the remaining permission information, displaying, in the content display page, display information corresponding to remaining available information, wherein the display information comprises the remaining permission information and a permission information obtaining option; and
in response to a trigger operation of the user on the permission information obtaining option, jumping to the permission information obtaining page, wherein the permission information obtaining page is configured to obtain the permission information according to the trigger operation of the user.

According to one or more embodiments of the present disclosure, wherein after the in response to a use operation of a user on a target function, determining, in real time, remaining permission information corresponding to the target function, the method further includes:
when it is determined that the remaining permission information meets a preset stopping condition, displaying the permission information obtaining page in the content display page, wherein the permission information obtaining page is configured to obtain the permission information according to the trigger operation of the user.

According to one or more embodiments of the present disclosure, wherein the target function is a media content stream browse function; and
after the in response to a use operation of a user on a target function, determining, in real time, remaining permission information corresponding to the target function, the method further includes:
when it is detected that the remaining permission information does not exist, stopping playing the media content.

In a second aspect, according to one or more embodiments of the present disclosure, an information display apparatus is provided, including:
a determining module, configured to in response to a use operation of a user on a target function, determine, in real time, remaining permission information corresponding to the target function, wherein the remaining permission information comprises a remaining available duration or a quantity of remaining available times; and
a display module, configured to display the remaining permission information in a preset display region in a content display page of the target function.

According to one or more embodiments of the present disclosure, the determining module is configured to:
determining, in real time, accumulated permission information corresponding to the target function; and
determining a difference between the accumulated permission information and a preset available permission threshold as the remaining permission information,
wherein the preset use permission threshold is a total available duration or a total quantity of available times which are corresponding to the target function and distributed to an account of the user according to a preset time period.

According to one or more embodiments of the present disclosure, the apparatus further includes:
an exhibiting module, configured to when it is detected that the remaining permission information is identical to the available permission threshold, displaying a prompt control on the content display page, wherein the prompt control is used to prompt the user of the available permission threshold of the target function within a preset time interval.

According to one or more embodiments of the present disclosure, the prompt control further includes a permission information obtaining option, and a closing option, and the apparatus further includes:
a jumping module, configured to in response to a trigger operation of the user on the permission information obtaining option, jumping to a permission information obtaining page, wherein the permission information obtaining page is configured to obtain permission information according to the trigger operation of the user;
a closing module, configured to: in response to a trigger operation of the user on the closing option, close the prompt control.

According to one or more embodiments of the present disclosure, the remaining permission information includes remaining available duration.

The display module is configured to:
display the remaining permission information in a countdown manner in the preset display region in the content display page of the target function.

According to one or more embodiments of the present disclosure, the remaining permission information includes remaining available duration.

The display module is configured to:
determine a target time unit corresponding to the remaining available duration based on a preset time threshold;
perform a converting operation on the remaining available duration according to the target time unit, to determine target display duration; and
display the target display duration in the preset display region in the content display page of the target function.

According to one or more embodiments of the present disclosure, the time threshold includes a first threshold and a second threshold; and
the display module is configured to:
if the remaining available duration is greater than the first threshold, determine that the target time unit corresponding to the remaining available duration is a first time unit;
if the remaining available duration is less than the first threshold, determine that the target time unit corresponding to the remaining available duration is a second time unit; or
if the remaining available duration is less than the second threshold, determine that the target time unit corresponding to the remaining available duration is a third time unit, where
the first threshold is greater than the second threshold.

According to one or more embodiments of the present disclosure, the apparatus further includes:
the display module, further configured to: in response to a trigger operation of the user on the remaining permission information, display, in the content display page, display information corresponding to the remaining available information, where the display information includes the remaining permission information and the permission information obtaining option; and
the jumping module, further configured to: in response to the trigger operation of the user on the permission information obtaining option, jump to the permission information obtaining page, where the permission information obtaining page is configured to obtain the permission information according to the trigger operation of the user.

According to one or more embodiments of the present disclosure, the apparatus further includes:
the exhibiting module, further configured to: if it is determined that the remaining permission information meets a preset stopping condition, display the permission information obtaining page in the content display page, where the permission information obtaining page is configured to obtain the permission information according to the trigger operation of the user.

According to one or more embodiments of the present disclosure, the target function is a music media content stream browse function; and
the apparatus further includes:
a control module, configured to: if it is detected that the remaining permission information does not exist, stop playing music media content.

In a third aspect, according to one or more embodiments of the present disclosure, an electronic device is provided, including at least one processor and a memory, where
the memory stores computer-executable instructions; and
the at least one processor executes the computer-executable instructions stored in the memory, so that the at least one processor performs the information display method according to the first aspect and the possible designs of the first aspect.

In a fourth aspect, according to one or more embodiments of the present disclosure, a computer-readable storage medium is provided. The computer-readable storage medium stores computer-executable instructions. When a processor executes the computer-executable instructions, the information display method according to the first aspect and the possible designs of the first aspect is implemented.

In a fifth aspect, according to one or more embodiments of the present disclosure, a computer program product is provided, including a computer program, where when the computer program is executed by a processor, the information display method according to the first aspect and the possible designs of the first aspect is implemented.

In a sixth aspect, an embodiment of the present disclosure provides a computer program, and the computer program enables a computer to perform the information display method according to the first aspect and the possible designs of the first aspect.

In the information display method and apparatus, the device, the computer-readable storage medium, the product, and the program that are provided in the present disclosure, the remaining permission information corresponding to the target function is determined in real time, and the remaining permission information is displayed on the content display page of the target function, so that when using the target function, the user can intuitively determine the remaining duration or remaining quantity of times corresponding to the permission of using the target function. This simplifies the procedure of viewing the remaining permission information, and improves user experience.

The foregoing descriptions are merely descriptions of preferred embodiments of the present disclosure and technical principles used in the present disclosure. A person skilled in the art should understand that the disclosure scope of the present disclosure is not limited to the technical solution formed by a particular combination of the foregoing technical features, but should also cover other technical solutions formed by any combination of the foregoing technical features or their equivalent features without departing from the foregoing disclosure concept, for example, technical solutions formed by interchanging the foregoing features with (but not limited to) technical features having similar functions disclosed in the present disclosure.

In addition, although the operations are described in a particular sequence, this should not be construed as requiring that the operations be executed in the particular sequence shown or in sequential order of execution. Multitasking and parallel processing may be advantageous in a particular environment. Similarly, although several specific implementation details are included in the foregoing discussion, these should not be construed as limiting the scope of the present disclosure. Some features described in the context of separate embodiments may also be implemented in combination in a single embodiment. Conversely, various features described in the context of a single embodiment may also be implemented in a plurality of embodiments, either separately or in any suitable sub-combination.

Although the present subject matter has been described using language specific to structural features and/or logical actions of the method, it should be understood that the subject matter defined in the appended claims is not necessarily limited to the particular features or actions described above. Rather, the particular features and actions described above are merely exemplary forms of implementing the claims.

## Claims

1. A method for information display, comprising:
in response to a use operation of a user on a target function, determining, in real time, remaining permission information corresponding to the target function, wherein the remaining permission information comprises a remaining available duration or a quantity of remaining available times; and
displaying the remaining permission information in a preset display region in a content display page of the target function.

2. The method according to claim 1, wherein the determining, in real time, remaining permission information corresponding to the target function comprises:
determining, in real time, accumulated permission information corresponding to the target function; and
determining a difference between the accumulated permission information and a preset available permission threshold as the remaining permission information,
wherein the preset use permission threshold is a total available duration or a total quantity of available times which are corresponding to the target function and distributed to an account of the user according to a preset time period.

3. The method according to claim 1 or 2, wherein after the in response to a use operation of a user on a target function, determining, in real time, remaining permission information corresponding to the target function, the method further comprises:
when it is detected that the remaining permission information is identical to the available permission threshold, displaying a prompt control on the content display page, wherein the prompt control is used to prompt the user of the available permission threshold of the target function within a preset time interval.

4. The method according to claim 3, wherein the prompt control further comprises a permission information obtaining option and a closing option, and after the displaying a prompt control on the content display page, the method further comprises:
in response to a trigger operation of the user on the permission information obtaining option, jumping to a permission information obtaining page, wherein the permission information obtaining page is configured to obtain permission information according to the trigger operation of the user; and
in response to a trigger operation of the user on the closing option, closing the prompt control.

5. The method according to any one of claims 1 to 4, wherein the remaining permission information comprises the remaining available duration; and
the displaying the remaining permission information in a preset display region in a content display page of the target function comprises:
displaying the remaining permission information in a countdown manner in the preset display region in the content display page of the target function.

6. The method according to any one of claims 1 to 5, wherein the remaining permission information comprises the remaining available duration; and
the displaying the remaining permission information in a preset display region in a content display page of the target function comprises:
determining a target time unit corresponding to the remaining available duration based on a preset time threshold;
performing a converting operation on the remaining available duration according to the target time unit, to determine target display duration; and
displaying the target display duration in the preset display region in the content display page of the target function.

7. The method according to claim 6, wherein the time threshold comprises a first threshold and a second threshold; and
the determining a target time unit corresponding to the remaining available duration based on a preset time threshold comprises:
when the remaining available duration is greater than the first threshold, determining that the target time unit corresponding to the remaining available duration is a first time unit;
when the remaining available duration is less than the first threshold, determining that the target time unit corresponding to the remaining available duration is a second time unit; or
when the remaining available duration is less than the second threshold, determining that the target time unit corresponding to the remaining available duration is a third time unit, wherein the first threshold is greater than the second threshold.

8. The method according to any one of claims 1 to 7, wherein after the displaying the remaining permission information in a preset display region in a content display page of the target function, the method further comprises:
in response to a trigger operation of the user on the remaining permission information, displaying, in the content display page, display information corresponding to remaining available information, wherein the display information comprises the remaining permission information and a permission information obtaining option; and
in response to a trigger operation of the user on the permission information obtaining option, jumping to a permission information obtaining page, wherein the permission information obtaining page is configured to obtain the permission information according to the trigger operation of the user.

9. The method according to any one of claims 1 to 8, wherein after the in response to a use operation of a user on a target function, determining, in real time, remaining permission information corresponding to the target function, the method further comprises:
when it is determined that the remaining permission information meets a preset stopping condition, displaying a permission information obtaining page in the content display page, wherein the permission information obtaining page is configured to obtain the permission information according to the trigger operation of the user.

10. The method according to any one of claims 1 to 9, wherein the target function is a media content stream browse function; and
after the in response to a use operation of a user on a target function, determining, in real time, remaining permission information corresponding to the target function, the method further comprises:
when it is detected that the remaining permission information does not exist, stopping playing the media content.

11. An apparatus for information display, comprising:
a determining module, configured to, in response to a use operation of a user on a target function, determine, in real time, remaining permission information corresponding to the target function, wherein the remaining permission information comprises a remaining available duration or a quantity of remaining available times; and
a display module, configured to display the remaining permission information in a preset display region in a content display page of the target function.

12. An electronic device, comprising a processor and a memory, wherein
the memory stores computer-executable instructions; and
the processor executes the computer-executable instructions stored in the memory to enable the processor to implement the method for information display according to any one of claims 1 to 10.

13. A computer-readable storage medium, wherein the computer-readable storage medium stores computer-executable instructions, and when a processor executes the computer-executable instructions, the method for information display according to any one of claims 1 to 10 is implemented.

14. A computer program product, comprising a computer program, wherein when the computer program is executed by a processor, the method for information display according to any one of claims 1 to 10 is implemented.

15. A computer program, wherein the computer program enables a computer to perform the method for information display according to any one of claims 1 to 10.
